# EUROPEAN PATENT SPECIFICATION

(11) **EP 1 755 869 B1**
(45) Date of publication and mention of the grant of the patent: **02.12.2009**
(21) Application number: 05750154.6
(22) Date of filing: 03.06.2005
(51) Int. Cl.: B29C 70/44, B29C 70/34

(54) **PROCESS FOR PRODUCING MONOLITHIC HOLLOW WHEELS IN RESIN REINFORCED WITH FIBRES AND POLYMERISED AT HIGH PRESSURE, AND THE PRODUCT OBTAINED**
VERFAHREN ZUR HERSTELLUNG VON MONOLITHISCHEN HOHLRÄDERN MIT FASERN VERSTÄRKTEM UND BEI HOHEM DRUCK POLYMERISIERTEM HARZ SOWIE ERHALTENES PRODUKT
PROCEDE DE PRODUCTION DE ROUES CREUSES MONOLITHIQUES EN RESINE RENFORCEE PAR DES FIBRES ET POLYMERISEE A HAUTE PRESSION, ET PRODUIT OBTENU

(30) Priority: 11.06.2004 IT PD20040149
(43) Date of publication of application: 28.02.2007
(73) Proprietor: Exit Engineering S.R.L., 35125 Padova (IT); Bottacin, Giuseppe, 35020 Saonara PD (IT)
(72) Inventor: BOTTACIN, Giuseppe, I-35020 Saonara (PD) (IT)
(74) Representative: Vinci, Marcello
(86) International application number: PCT/IT2005/000315
(87) International publication number: WO 2005/120812

(56) References cited:
- US-A- 4 635 500
- US-A- 4 853 172
- US-A- 4 983 430

## Description

### FIELD OF APPLICATION

The present patent concerns the production of complex hollow objects in resin and fibre and in particular it concerns the production of hollow wheels with spokes in resin and fibre.

### GENERAL NOTES ON THE PRODUCTION OF COMPOSITE MATERIALS

Many objects are made of composite material consisting of a thermo-setting resin, usually an epoxy resin, reinforced with fibres, usually carbon or glass or aramidic fibres.

The layers of fibre, impregnated by hand or pre-impregnated with resin, are arranged on the internal surface of a mould.

The resin is then thermally polymerised so that a solid is obtained with an external shape identical to the internal surface of the mould.

To obtain composite materials with excellent mechanical properties it is fundamental to eliminate any air that may be included between the various layers of fibre and to make these layers of fibre adhere strongly to one another. To achieve this purpose, the mould with the laminated layers of fibres and resin is enclosed in a bag which is then placed in an autoclave.

The bag containing the mould and the laminate is connected to a vacuum pump, while the autoclave is brought to a suitable pressure.

As a result the laminate of fibres and resin is crushed towards the mould and at the same time any air that may have been trapped between the fibres and the resin is extracted.

This process is widely used for solid or at least open objects, but it is not suitable for producing hollow and closed objects, or objects with difficult access to the inside, for example hollow wheels, in which the internal mould is not removable.

To obtain materials with excellent mechanical properties it is of fundamental importance to eliminate the air which remains trapped between the various reinforcing layers during lamination.

It is also fundamental to place the various layers of fibres in close contact with one another.

Generally, to make a hollow object one or more internal bags are used, which may be removed when the production of the object has been completed.

This is not possible for closed objects, or ones where access to the inside is difficult.

The removal of said bags through small openings requires considerable time and labour, due to the constant risk of damaging the object produced.

A known process for making hollow objects contemplates the production of two or more concave, or at least open, parts, which are then joined together.

As well as requiring the production of several separate parts, this process requires a precise assembly of the various parts with no possibility to check their correct joining from the inside of the object. In any case the finished object may present structural weaknesses along the joining lines of the various parts.

Boat steering wheels realised with this process are fragile in the join between the spokes and the circumference wheel, unless the intersections between spokes and wheel are stiffened, increasing the weight of the finished object.

US 4,983,430 relates to a fibre reinforced composite product having a hollow interior, said product being manufactured by inserting a tubular bladder inside a length of composite material in tubular form and wherein said composite material can be moulded into the desired shape while inflating the bladder through one of its end.

US 4,853,172 relates to a method for fabricating a resin composite article having a tubular structure, said method comprising disposing a prepreg structure within a mould and disposed adjacent a mandrel comprising an inner bag containing a solid filler that comprises a part of the volume of the inner bag. A vacuum bag applies a pressure to the inner bag causing the inner bag to apply a substantially uniform pressure to the surface of the prepreg.

US 4,635,500 relates to a steering wheel manufactured using a mould cavity forming the rim, spoke and hub portion of the steering wheel, and wherein a composite material is placed inside said mould. When the mould is closed and evacuated, a thermosetting resin is injected into the mould.

The features of the preamble of claim 1 are disclosed in this document.

### AIM OF THE INVENTION

To overcome all these drawbacks, a new process has been studied for making monolithic hollow wheels in resin reinforced with fibres and polymerised at high pressure.

The aim of the new process is to obtain monolithic hollow wheels in resin reinforced with fibres, in particular boat steering wheels.

Another aim of the new process is to obtain hollow wheels without joins. Another aim of the new process is to obtain hollow wheels having continuous walls without interruptions.

Another aim of the new process is to obtain hollow wheels having the internal surface continuous and without deformations, ridges, hollows, or decreases in the thickness of the walls.

These and other aims, direct and complementary, are achieved by the new process for the production of monolithic hollow wheels in resin reinforced with fibres and polymerised at high pressure.

### DESCRIPTION OF THE INVENTION

The particular application described herein is suitable for the production of steering wheels for boats or cars, but it may be used for wheels for bicycles, cars, motor vehicles and in general for any hollow structure composed of an external toroidal element, a central hub and joining elements consisting of spokes. The invention allows the production of this type of structure in a single piece, unlike other methods which require the production of separate components that must be joined to obtain the structure.

The new process allows the production of monolithic circular hollow structures, composed of a central hub and an external toroidal element, joined by one or more spokes, in resin reinforced with fibres and polymerised under pressure. The advantage of this method is that it makes it possible to produce hollow wheels in one piece. The construction of hollow wheels presents notable advantages in terms of lightness in comparison with solid wheels, and the monolithic construction has no structural discontinuities due to joining and therefore ensures, in the majority of cases, better mechanical performance. Also in cases where the method of joining the subcomponents is theoretically able to provide good mechanical performance, the impossibility of checking the inside of the joining areas does not guarantee sufficient performance levels in all cases.

The new process involves the use of a mould in two parts along the line on which the circumference of the wheel lies.

Each part of the mould, called also a half-mould, comprises the negative of one half of the external surface of the steering wheel.

One of the half-moulds presents an opening, preferably coinciding with the hub.

Both half-moulds are provided with flanges for the reciprocal coupling.

The layers of resin-impregnated fibres are laid inside the grooves of the mould of the object to be realised, suitably treated to ensure removal.

In one of the half-moulds the layers of fibre and resin are laid up to the edge where coupling with the corresponding half-mould takes place, while in the opposite half-mould the layers of fibre and resin protrude beyond said coupling edge.

In the half-mould with protruding or projecting layers tubular bags are laid, closed at one end, on top of the layers of fibre and resin and inside the shape to be realised. In particular, each tubular bag is positioned with the closed end at the intersection between a spoke and the circumference of the wheel, follows a length of circumference of the wheel until reaching the next intersection, and then follows a spoke as far as the hub. The open ends of said tubular bags are arranged so that they come out of the central hole, corresponding to the hub. The diameter of each tubular bag is equal to or larger than the maximum diameter of the internal sections of the steering wheel, or of the object to be obtained, so as to ensure the total filling of the hollow internal volumes. The protruding part of said layers of fibre and resin is folded and laid on top of said tubular bags.

The two half-moulds are joined together and the whole mould is enclosed in an external bag through which the free ends of the tubular bags located inside the mould pass.

The ends of the internal tubular bags are connected to a suction pump, together with the external bag enclosing the whole mould.

The tubular bags and the external bag are connected together, so as to form a continuous closed nylon bag, inside which is the mould with the fabrics and the resin to be polymerised. The shape of this continuous bag is complex, but it is possible to identify its internal surface and its external surface, as in any closed wrapping.

The assembly of the two half-moulds thus joined and contained in the external bag under vacuum is put into an autoclave. Then the suction pumps in the autoclave are connected to the mouth of the set of bags and activated to keep the set under vacuum.

Both the temperature and the pressure are raised inside the autoclave for the time necessary to achieve the perfect curing of the resin.

In particular, the protruding part of the layers of fibre and resin of a half-mould is compressed on the layers of fibre and resin of the other half-mould, obtaining a continuous join between the layers of fibre and resin of the two half-moulds.

The pump connected to the set of bags sucks up any air in the layers of fibre and resin or between said layers and the internal shape of the half-moulds.

At the end of the polymerisation process, after the pumps have been switched off and the moulds opened, the object is extracted from the moulds.

The object obtained does not present any joining lines, the layers of fibre and resin of the two half-moulds are perfectly joined and compressed along the whole internal surface, there are no cores or other heavy objects left inside the wheel, the external surface of the whole wheel is one and uninterrupted, the openings in the hub from which the tubular bags are extracted are suitably covered and closed by the shaft or pin onto which the steering wheel is applied.

### PREFERRED PROCESS

The characteristics of the new process for the production of monolithic hollow wheels in resin reinforced with fibres and polymerised at high pressure, and the product obtained will be better explained by the following description with reference to the drawings, enclosed purely as an example without limitation. The following description refers to the production of a boat steering wheel, but the considerations made apply to the production of any other hollow wheel.

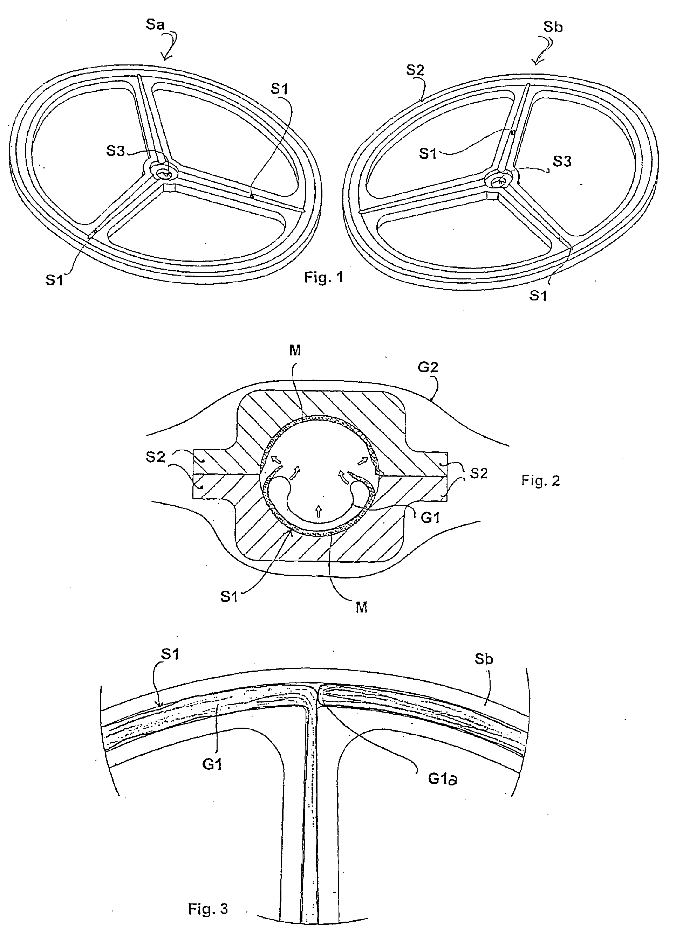

Figure 1 shows the two half-moulds (Sa, Sb) with inside the groove (S1) reproducing in the negative the external surface of the steering wheel.

Each half-mould (Sa, Sb) is provided with flanges or edges (S2) for coupling with the other half-mould (Sb, Sa).

At least one of the two half-moulds (Sa, Sb) has a central hole (S3), coinciding with the hub of the wheel, for access to the spokes of the wheel.

The groove (S1) reproducing the object to be produced is coated with detaching agents, that is, with products suited to facilitate the removal of the object in fibre and resin from the half-moulds (Sa, Sb) themselves.

In the grooves (S1) of the two half-moulds (Sa, Sb) layers of fibre and resin (M) are placed, in such a way as to obtain the desired thickness of the walls of the object to be made.

In particular, in one half-mould (Sa) the layers of fibre and resin (M) are laid until the coupling surface of the half-mould (Sa), with the complementary half-mould (Sb), is reached, while in the other half-mould (Sb) the layers of fibre and resin (M) are laid in such a way as to protrude or project by a suitable amount beyond the coupling surface of the half-mould (Sb), as can be seen in the cross section shown in figure 2.

Then tubular bags (G1) made of plastic material resistant to high temperatures, typically polyamide or nylon, and closed at one end (G1a) are laid inside the half-mould (Sb) having the projecting layers of fibre and resin (M).

Said tubular bags (G1) are cylindrical in shape with diameter equal to or greater than the largest internal cross section of the object to be realised and they are laid in such a way as to occupy all the space inside the object to be produced.

Figure 3 is a schematic view of the arrangement of said tubular bags (G1) for producing a boat steering wheel:
- the closed end (G1a) of the bag (G1) is placed at the intersection between one spoke of the steering wheel and the corresponding segment of the circumference of said wheel;
- the bag (G1) is laid along said segment of the circumference of said wheel until it reaches the intersection with the next spoke and is folded along the spoke until it reaches the hub and the corresponding hole (S3) in the half-mould (Sb).

The various open ends of the various bags (G1) are joined together outside the hub hole (S3).

The protruding or projecting part of layers of fibre and resin (M) is laid on top of the tubular bags (G1) and the two half-moulds (Sa, Sb) are joined and closed together.

The mould (S), consisting of the two joined half-moulds (Sa, Sb) and assembled as described, is inserted in a bag (G2), hereinafter referred to as the external bag for convenience, in such a way that the joined mouths of the internal tubular bags (G1) are connected to the external bag (G2).

The assembly consisting of the mould (S) and the internal (G1) and external bags (G2) is placed in an autoclave and the bags (G1, G2) are connected to a suction pump.

Moreover, the atmosphere in the autoclave acts jointly on the tubular bags (G1) inside the mould (S) and on the layers of fibre and resin (M), so that all the layers of fibre and resin (M) are compressed towards the walls of the internal groove (S1) of the two half-moulds (Sa, Sb). In particular, said expansion of the internal tubular bags (G1) entails also, and above all, the compression of the projecting part of the layers of fibre and resin (M) laid in one half-mould (Sb) on the layers of fibre and resin (M) in the other half-mould (Sa), so as to obtain a continuous join between the layers of fibre and resin (M) of the two half-moulds (Sa, Sb).

The suction pump extracts the air from inside the external bag (G2). The air present inside the mould (S) and between the layers of fibre and resin (M) is filtered towards the outside of the mould (S) itself and is sucked up by said suction pump.

Instead of the internal tubular bags (G1), it is possible to use a tubular bag in the shape of a circle, arranged corresponding to the external toroidal element of the steering wheel and connected to the various linear tubular bags laid corresponding to the spokes of the steering wheel.

An equivalent solution involves the use of half-moulds (Sa, Sb) that can be sealed together so as to avoid the use of the external bag (G2). The internal tubular bags (G1) that come out of the hub hole (S3) are opened and their edges sealed around the hub hole (S3).

The two half-moulds (Sa, Sb) are sealed along their joining line so as to create a closed chamber coinciding with the mould (S) and the air is sucked out of the inside of the mould (S) itself, by connecting a pump to it.

While keeping the internal tubular bags (G1), this second solution avoids the use of the external bag.

It is also possible to have the internal tubular bags joined inside the hub, by means of a further connecting bag that is able to fill the internal volume of the hub and to protrude from the central opening to join in turn with the external bag (G2). In this case the tubular bags are not made protrude directly from the opening of the mould, but they will be connected with the additional connecting bag close to the beginning of the spokes inside the hub, and said additional connecting bag will then provide for connection to the external bag (G2).

Instead of many internal tubular bags (G1) closed at one end (G1a), it is possible to use a single internal bag (G1) specially shaped according to the object to be obtained. Substantially, to realise the steering wheel, two sheets of plastic material resistant to high temperatures, typically polyamide or nylon, are joined together and are then die-cut and welded along the perimeter of the object to be obtained, in this specific case along the edges of the toroidal element, of the spokes and of the hub.

The exceeding and not pertinent parts, in this specific case the parts between two consecutive spokes, are removed obtaining an internal bag (G1) having exactly the shape of the internal compartment of the object to be produced. The object obtained, in particular the steering wheel, is monolithic, that is, without joins between two or more parts produced separately.

The layers of fibre and resin (M) in the two half moulds (Sa, Sb) are perfectly joined and compressed along the whole internal surface.

The object is obtained without the aid of a core or of an internal shaping or reinforcing structure.

The internal tubular bags (G1) ensure compression and adhesion between the various layers of fibre and resin (M) and between the edges of the layers (M) of one half-mould (Sa) and the edges of the layers (M) of the complementary half-mould (Sb).

The objects produced do not require the use of gussets or additional reinforcing layers in the structural intersection areas.

Therefore, with reference to the above description and to the enclosed drawings, the following claims are expressed.

## Claims

1. Process for producing monolithic hollow wheels in resin reinforced with fibres and polymerised at high pressure, using two half-moulds (Sa, Sb) each shaped according to one part of the negative outline of the wheel to be produced, with the respective spokes and hub, **characterised in that** it comprises:
■ one or more tubular plastic bags (G1);
■ the treatment with detaching agent of the two half-moulds (Sa, Sb) reproducing the object to be produced;
■ the placing of layers of fibre and resin (M) in the grooves (S1) of the two half-moulds (Sa, Sb), so as to obtain the desired thickness of the walls of the object to be produced, and wherein on at least one half-mould (Sb) the layers of fibre and resin (M) are placed in such a way as to protrude or project by a suitable length beyond the coupling surface of the half-mould (Sb), so as to adhere to and join with the edges of the layers of fibre and resin (M) of the opposite half-mould (Sa);
■ the inserting of one or more tubular bags (G1) inside the half-mould (Sb) having the protruding layers of fibre and resin (M), in all the areas that must be hollow and with at least one open end protruding from the half-mould (Sb);
■ the overlapping of said protruding or projecting part of layers of fibre and resin (M) on top of the tubular bags (G1);
■ the closing of the two half-moulds (Sa, Sb), provided with flanges for the reciprocal coupling;
and wherein, in order to expand said tubular bags (G1) so that they press the layers of fibre and resin (M), at least a suction pump is operated so that the air inside the mould (S) and between the layers of fibre and resin (M) is extracted, said mould (S) being sealed in respect of the outer space by inserting in an external plastic bag (G2) wherein the mouths of the internal bags (G1) and of the external bag (G2) are joined to the at least one suction pump or by sealing said half-moulds (Sa, Sb) together.

2. Process for producing monolithic hollow wheels in resin reinforced with fibres according to claim 1, **characterised in that** said external bag (G2) is connected to the mouths of said internal tubular bags (G1) so as to form a continuous closed bag, on the mouth of which said suction pump is connected.

3. Process for producing monolithic hollow wheels in resin reinforced with fibres according to claim 1, **characterised in that** the two half-moulds (Sa, Sb) have tight and sealable coupling edges, and wherein at least one half-mould (Sa, Sb) is provided with one or more openings communicating with the grooves (S1) of the mould of the object to be produced and which may be connected with suction pumps.

4. Process for producing monolithic hollow wheels in resin reinforced with fibres according to claim 2, **characterised in that** the external bag (G2) containing the two half-moulds (Sa, Sb) is inserted in an autoclave.

5. Process for producing monolithic hollow wheels in resin reinforced with fibres according to the previous claims, **characterised in that** each internal tubular bag (G1) is arranged as follows:
■ the closed end (G1a) of the bag (G1) is placed at the intersection between one spoke of the steering wheel and the corresponding segment of the circumference of said wheel;
■ the bag (G1) is laid along said segment of the circumference of said wheel until it reaches the intersection with the next spoke and is folded along the spoke until it reaches the hub and comes out of the corresponding hole (S3) in the half-mould (Sb).

6. Process for producing monolithic hollow wheels in resin reinforced with fibres according to the previous claims, **characterised in that** each internal tubular bag (G1) is composed of:
■ a ring-shaped tubular bag laid along the toroidal element of the object to be obtained;
■ a generically cylindrical bag placed corresponding to the hub hole;
■ a linear tubular bag placed corresponding to each spoke and connected to the ring-shaped bag and to the bag in the hub hole.

7. Process for producing monolithic hollow wheels in resin reinforced with fibres according to the previous claims, **characterised in that** the internal tubular bag (G1) is composed of two overlapping sheets of plastic material, die-cut and welded on the cut edges, according to the hollow internal shape to be obtained.

8. Hollow wheel in resin reinforced with fibres and polymerised at high pressure, **characterised in that** it is carried out in a single monolithic piece using the process described in the previous claims.

## Patentansprüche

1. Verfahren zur Herstellung von monolithischen Hohlrädern aus faserverstärktem und bei hohem Druck polymerisierten Harz, wobei zwei Halbformen (Sa, Sb) verwendet werden, von denen jede einem Teil der Negativkontur des herzustellenden Rads, mit den zugehörigen Speichen und der Nabe, entsprechend geformt ist, **dadurch gekennzeichnet, dass** es ferner Folgendes umfasst:
■ einen oder mehrere röhrenförmige Kunststoffbeutel (G1);
■ das Behandeln der beiden Halbformen (Sa, Sb), die den herzustellenden Gegenstand reproduzieren, mit einem Formtrennmittel;
■ das Anordnen von Schichten aus Faser und Harz (M) in den Rillen (S1) der beiden Halbformen (Sa, Sb), um die gewünschte Dicke der Wände des herzustellenden Gegenstands zu erhalten, wobei an zumindest einer Halbform (Sb) die Schichten aus Faser und Harz (M) derart angeordnet werden, dass sie um eine geeignete Länge über die Kopplungsoberfläche der Halbform (Sb) vorstehen oder hinausragen, um an den Rändern der Schichten aus Faser und Harz (M) der gegenüberliegenden Halbform (Sa) anzuliegen und sich mit diesen zu verbinden;
■ das Einführen von einem oder mehreren röhrenförmigen Beuteln (G1) in das Innere der Halbform (Sb), die die vorstehenden Schichten aus Faser und Harz (M) aufweist, in allen Bereichen, die hohl sein müssen, mit zumindest einem offenen Ende, das aus der Halbform (Sb) herausragt;
■ das Legen der vorstehenden oder herausragenden Teile der Schichten aus Faser und Harz (M) über die röhrenförmigen Beutel (G1),
■ das Verschließen der zwei Halbformen (Sa, Sb), die mit Flanschen zur gegenseitigen Kopplung ausgestattet sind;
wobei zum Ausdehnen der röhrenförmigen Beutel (G1), damit diese die Schichten aus Faser und Harz (M) pressen, zumindest eine Saugpumpe betrieben wird, sodass die Luft im Inneren der Form (S) und zwischen den Schichten aus Faser und Harz (M) extrahiert wird, wobei die Form (S) in Bezug auf die Außenumgebung durch das Einführen in einen Außenbeutel (G2) aus Kunststoff, wobei die Mündungen der Innenbeutel (G1) und des Außenbeutels (G2) mit der zumindest einen Saugpumpe verbunden sind, oder durch das miteinander Versiegeln der beiden Halbformen (Sa, Sb) abgesiegelt ist.

2. Verfahren zur Herstellung von monolithischen Hohlrädern aus faserverstärktem Harz nach Anspruch 1, **dadurch gekennzeichnet, dass** der Außenbeutel (G2) mit den Mündungen der Innenbeutel (G1) verbunden ist, um einen durchgehenden, verschlossenen Beutel zu bilden, mit dessen Mündung die Saugpumpe verbunden ist.

3. Verfahren zur Herstellung von monolithischen Hohlrädern aus faserverstärktem Harz nach Anspruch 1, **dadurch gekennzeichnet, dass** die zwei Halbformen (Sa, Sb) dichte, versiegelbare Kopplungsränder aufweisen, wobei zumindest eine Halbform (Sa, Sb) eine oder mehrere Öffnungen aufweist, die mit den Rillen (S1) der Form des herzustellenden Gegenstands kommunizieren und mit Saugpumpen verbunden werden können.

4. Verfahren zur Herstellung von monolithischen Hohlrädern aus faserverstärktem Harz nach Anspruch 2, **dadurch gekennzeichnet, dass** der Außenbeutel (G2), der die zwei Halbformen (Sa, Sb) enthält, in einen Autoklaven eingebracht wird.

5. Verfahren zur Herstellung von monolithischen Hohlrädern aus faserverstärktem Harz nach einem der vorangegangenen Ansprüche, **dadurch gekennzeichnet, dass** jeder röhrenförmige Innenbeutel (G1) wie folgt angeordnet wird:
■ das geschlossene Ende (G1a) des Beutels (G1) wird an der Schnittstelle zwischen einer Speiche des Steuerrads und dem entsprechenden Segment des Umfangs des Rads angeordnet;
■ der Beutel (G1) wird entlang dem Segment des Umfangs des Rads verlegt, bis er die Schnittstelle mit der nächsten Speiche erreicht, und wird entlang der Speiche gefaltet, bis er die Nabe erreicht und aus dem entsprechenden Loch (S3) in der Halbform (Sb) heraustritt.

6. Verfahren zur Herstellung von monolithischen Hohlrädern aus faserverstärktem Harz nach einem der vorangegangenen Ansprüche, **dadurch gekennzeichnet, dass** jeder röhrenförmige Innenbeutel (G1) aus Folgendem besteht:
■ einem ringförmigen, röhrenförmigen Beutel, der entlang dem kreisringförmigen Element des zu erhaltenden Gegenstands verlegt wird;
■ einem im Allgemeinem zylindrischen Beutel, der dem Nabenloch entsprechend angeordnet wird;
■ einem linearen, röhrenförmigen Beutel, der jeder Speiche entsprechend angeordnet wird und mit dem ringförmigen Beutel und dem Beutel im Nabenloch verbunden ist.

7. Verfahren zur Herstellung von monolithischen Hohlrädern aus faserverstärktem Harz nach einem der vorangegangenen Ansprüche, **dadurch gekennzeichnet, dass** der röhrenförmige Innenbeutel (G1) aus zwei übereinander gelegten Lagen aus Kunststoffmaterial besteht, die entsprechend der zu erhaltenden inneren Hohlform gestanzt und an den Stanzrändem verschweißt sind.

8. Hohlrad aus faserverstärktem und bei hohem Druck polymerisierten Harz, **dadurch gekennzeichnet, dass** es in einem monolithischen Stück unter Verwendung des in den vorangegangenen Ansprüchen beschriebenen Verfahrens erhalten ist.

## Revendications

1. Processus pour la production de roues creuses monolithiques en résine renforcée avec fibres et polymérisée à haute pression en utilisant deux demi-moules (Sa, Sb) chacun façonné selon une partie du profil négatif de la roue à réaliser, avec les rayons et le moyeu correspondants, **caractérisé en ce qu'**il comprend :
■ un ou plusieurs sacs tubulaires en plastique (G1) ;
■ le traitement avec agent détacheur des deux demi-moules (Sa, Sb) reproduisant l'objet à réaliser ;
■ la mise en place de couches de fibre et résine (M) dans les cannelures (S1) des deux demi-moules (Sa, Sb) de façon à obtenir l'épaisseur souhaité des parois de l'objet à réaliser, et où sur au moins un demi-moule (Sb) les couches de fibre et résine (M) sont positionnées de façon à saillir ou déborder d'une longueur adaptée au-delà de la surface de raccordement du demi-moule (Sb), de manière à adhérer et s'unir avec les bords des couches de fibre et résine (M) du demi-moule opposé (Sa) ;
■ l'introduction d'un ou plusieurs sacs tubulaires (G1) à l'intérieur du demi-moule (Sb) ayant les couches de fibre et résine (M) saillantes, dans toutes les zones qui doivent être creuses et avec au moins une extrémité ouverte saillant du demi-moule (Sb) ;
■ le recouvrement de ladite partie débordante ou saillante de couches de fibre et résine (M) sur les sacs tubulaires (G1);
■ la fermeture des deux demi-moules (Sa, Sb), dotés de brides pour le raccordement réciproque ;
et où, afin d'étendre lesdits sacs tubulaires (G1) de manière à s'appuyer sur les couches de fibre et résine (M), au moins une pompe d'aspiration est actionnée de façon à ce que l'air à l'intérieur du moule (S) et entre les couches de fibre et résine (M) est extraite, ledit moule (S) étant scellé par rapport à l'espace extérieur grâce à l'introduction dans un sac externe en plastique (G2) où les bouches des sacs internes (G1) et des sacs externes (G2) s'unissent à au moins une pompe d'aspiration ou grâce à la fermeture hermétique desdits demi-moules (Sa, Sb).

2. Processus pour la production de roues creuses monolithiques en résine renforcée avec fibres selon la revendication 1, **caractérisé en ce que** ledit sac externe (G2) est relié aux bouches desdits sacs tubulaires internes (G1) afin de former un sac fermé continu, sur la bouche duquel ladite pompe d'aspiration est reliée.

3. Processus pour la production de roues creuses monolithiques en résine renforcée avec fibres selon la revendication 1, **caractérisé en ce que** les deux demi-moules (Sa, Sb) présentent des bords de raccordement étanches et scellables, et où au moins un demi-moule (Sa, Sb) est doté d'une ou plusieurs ouvertures communiquant avec les cannelures (S1) du moule de l'objet à réaliser et qui peut être relié avec des pompes d'aspiration.

4. Processus pour la production de roues creuses monolithiques en résine renforcée avec fibres selon la revendication 2, **caractérisé en ce que** le sac externe (G2) contenant les deux demi-moules (Sa, Sb) est inséré dans un autoclave.

5. Processus pour la production de roues creuses monolithiques en résine renforcée avec fibres selon les revendications précédentes, **caractérisé en ce que** chaque sac tubulaire interne (G1) est positionné de la manière suivante :
■ l'extrémité fermée (G1a) du sac (G1) est positionnée sur l'intersection entre un rayon de la roue directrice et le segment correspondant de la circonférence de ladite roue ;
■ le sac (G1) est disposé le long dudit segment de la circonférence de ladite roue jusqu'à ce qu'il atteint l'intersection avec le rayon successif et est replié le long dudit rayon jusqu'à ce qu'il atteint le moyeu et sort du trou correspondant (S3) dans le demi-moule (Sb).

6. Processus pour la production de roues creuses monolithiques en résine renforcée avec fibres selon les revendications précédentes, **caractérisé en ce que** chaque sac tubulaire interne (G1) se compose de :
■ un sac tubulaire annulaire disposé le long de l'élément toroïdal de l'objet à réaliser ;
■ un sac généralement cylindrique positionné à hauteur du trou du moyeu ;
■ un sac tubulaire linéaire positionné à hauteur de chaque rayon et relié avec le sac annulaire et avec le sac se trouvant dans le trou du moyeu.

7. Processus pour la production de roues creuses monolithiques en résine renforcée avec fibres selon les revendications précédentes, **caractérisé en ce que** le sac tubulaire inerne (G1) se compose de deux feuilles de matériel plastique superposées, découpées et soudées sur les bords coupés, selon la forme interne creuse à obtenir.

8. Roue creuse en résine renforcée avec fibres et polymérisée à haute pression, **caractérisée en ce qu'**elle est réalisée en une pièce unique monolithique en utilisant le processus décrit dans les revendications précédentes.
